# EUROPÄISCHE PATENTSCHRIFT

(11) **EP 1 000 990 B1**
(45) Veröffentlichungstag und Bekanntmachung des Hinweises auf die Patenterteilung: **24.09.2003**
(21) Anmeldenummer: 99122783.6
(22) Anmeldetag: 16.11.1999
(51) Int. Cl.: C09G 1/08, C09G 1/04, C14C 9/02

(54) **Lederpflegemittel**
Leather preserving agent
Produit d'entretien pour cuir

(30) Priorität: 16.11.1998 DE 19852752
(43) Veröffentlichungstag der Anmeldung: 17.05.2000
(73) Patentinhaber: Werner & Mertz GmbH, D-55120 Mainz (DE)
(72) Erfinder: Bechtold, Werner, 67551 Worms (DE); Krass, Horst, 55271 Stadecken-Elsheim (DE); Zimmermann, Uwe Dr., 65207 Wiesbaden (DE)
(74) Vertreter: Kinzebach, Werner, Dr.

(56) Entgegenhaltungen:
- EP-A- 0 224 778
- EP-A- 0 446 094
- DE-A- 3 046 214
- DE-A- 19 546 073
- US-A- 2 925 349
- US-A- 4 055 433
- US-A- 5 389 129
- US-A- 5 502 104
- US-A- 5 658 484
- DATABASE WPI Section Ch, Week 197801 Derwent Publications Ltd., London, GB; Class A17, AN 1978-00656A XP002174067 & JP 52 135885 A (NIPPON OIL KK), 14. November 1977 (1977-11-14)

## Beschreibung

Die vorliegende Erfindung betrifft ein Lederpflegemittel, das im Wesentlichen frei von flüchtigen organischen Lösungsmitteln ist, und ein Verfahren zu seiner Herstellung.

Lederpflegemittel sind farblose oder mit Farbmitteln gefärbte wachshaltige Pasten oder Flüssigkeiten, die nach dem Auftragen auf glattes Leder, z. B. Schuhwerk, durch Polieren des entstandenen Wachsfilmes einen hohen Glanz hervorrufen. Man unterscheidet zwischen den sog. Ölwaren und Waren auf wässriger Basis, den sog. Emulsionswaren.

Zu den Ölwaren gehören die herkömmlichen Schuhcremes. Diese bestehen aus einem Gemisch von Wachsen, z. B. Montanwachs-Derivaten, Mikrowachsen, Ceresin, Carnauba-, Candelillawachs, Stearin, synthetischen Wachsen, Paraffinen und Lösungsmittelgemischen, z. B. Testbenzin, Terpentinöl usw. Die Ölware besitzt eine relativ harte, gut verteilbare Konsistenz und wird meist in Dosen abgefüllt. Die Konsistenz der Ölware ist durch ein bestimmtes rheologisches Verhalten gekennzeichnet, das bisweilen als Schollenbruch bezeichnet wird. Unter "Schollenbruch" wird verstanden, dass das Mittel bei der Entnahme aus der Dose bricht und dabei typische Schollen bildet. Diese Erscheinung beruht vermutlich darauf, dass das Mittel bei Einwirkung kleiner Kräfte zunächst elastisch verformt wird und bei Einwirkung größerer Kräfte schließlich bricht, wobei die erhaltenen Bruchstücke ihre ursprüngliche Ausdehnung wieder annehmen. Die Bruchstücke sehen daher wie Schollen aus.

Ware auf wässriger Basis wird als pastöse Emulsion in Tuben oder als Flüssigkeit in Flaschen angeboten. Es sind auch verdickte Emulsionen bekannt, die in Dosen abgefüllt werden können. Aus der DE-OS 35 41 434 ist eine Lederpflegeemulsion bekannt, die Wachs, Emulgator, Wasser und ein anionisches Polysaccharid als Coemulgator enthält. Diese bekannte lösungsmittelfreie Schuhcreme auf Emulsionsbasis weist eine cremeartige Konsistenz auf, 1 die als "löffelbar" bezeichnet werden kann, d. h., bei Entnahme von Produkt mit einem Löffel bleibt ein "Negativabbild" des Löffelrückens erkennbar. Die Firmendruckschrift "Die Ökologie braucht das Know-How" der Hoechst AG, Deutschland, beschreibt z. B. eine Lederpflegerezeptur auf der Basis von Wasser, Säurewachs, Paraffin, Kolophonium, Emulgator und Kaliumhydroxid. Das nach dieser Rezeptur erhältliche Erzeugnis zeigt eine gewisse Verbesserung hinsichtlich der Auftragbarkeit. Das für Ölware typische "Schollenbruch"-Verhalten beobachtet man bei den bekannten Produkten nicht.

Lösungsmittelhaltige Lederpflegemittel werden von den Verbrauchern zunehmend aufgrund des meist unangenehmen Geruchs der eingesetzten Lösungsmittel und steigender Umweltdiskussionen abgelehnt. Andererseits ist es bislang nicht gelungen, mit lösungsmittelfreien Emulsions-Lederpflegemitteln die Konsistenz und die gute Verteilbarkeit lösungsmittelhaltiger Dosenschuhcreme nachzuahmen. Aus Marktuntersuchungen ist bekannt, dass bestimmte Verbraucherkreise nach einem Produkt verlangen, das die typische, durch den Schollenbruch gekennzeichnete Konsistenz der Ölware aufweist. Produkte mit cremeartiger Konsistenz werden abgelehnt. Die durch Schollenbruch gekennzeichnete Konsistenz weist den Vorteil auf, dass mit einem geeigneten Auftragsgerät, z. B. einer Schuhbürste oder einem Lappen, beim Eintauchen in die Dose oder den Tiegel des Lederpflegemittels stets die gewünschte Menge entnommen werden kann, während bei Produkten mit cremeartiger Konsistenz meist unbeabsichtigt eine zu große Menge Produkt entnommen wird. Die cremeartige Konsistenz bedingt auβerdem einen kalten Fluss. Dieses Verhalten ist deswegen unerwünscht. da die mit dem Produkt gefüllten flachen Dosen, z. B. in einem Verkaufsregal, häufig schräg oder hochkant aufgestellt werden, um eine größere Schaufläche zu bieten. Ein Mittel, das kalten Fluss zeigt, verläuft unter diesen Bedingungen und haftet am Deckel der Dose, was der Verbraucher beim Öffnen der Dose als lästig empfindet.

Der vorliegenden Erfindung liegt daher die Aufgabe zugrunde, ein von flüchtigen organischen Lösungsmitteln im Wesentlichen freies Lederpflegemittel bereitzustellen, das eine Konsistenz aufweist, die derjenigen der herkömmlichen Ölware vergleichbar ist. Insbesondere sollte das erfindungsgemäße Lederpflegemittel das für Ölware charakteristische Schollenbruch-Verhalten zeigen. Das Lederpflegemittel soll außerdem keinen kalten Fluss zeigen.

Erfindungsgemäß wird diese Aufgabe durch ein Lederpflegemittel gelöst, das im Wesentlichen frei von flüchtigen organischen Lösungsmitteln ist, eine Emulsion von Wachs, Wasser und Emulgator umfasst, und jeweils bei einer Temperatur von 23 °C bei 5-minütiger Einwirkung einer Schubspannung von 750 Pa eine maximale Deformation γ von 0,1 oder weniger und nach 5-minütiger Relaxation eine bleibende Deformation von 50 % der maximalen Deformation oder weniger aufweist.

Die maximale Deformation und die bleibende Deformation werden anhand einer Kriech-/Rückverformungsmessung (Creep-Recovery-Messung) ermittelt. Diese Messung gestattet eine Unterscheidung zwischen dem viskosen Anteil und dem elastischen Anteil bei rheologischen Phänomenen. In der Kriechphase wird auf eine zu messende Probe eine konstante Schubspannung ausgeübt und die auftretende Deformation aufgezeichnet. In der Rückverformungsphase (Relaxationsphase) entfällt die Schubspannung und die gegebenenfalls auftretende Rückverformung der Probe wird aufgezeichnet. Bei einer ideal-elastischen Probe wird in der Kriechphase eine zeitunabhängige, zur aufgewandten Schubspannung proportionale Deformation erhalten. Bei Entlastung verschwindet die Deformation sofort und vollkommen und der Probekörper erlangt seine ursprüngliche Form vollständig zurück. Bei einer ideal-viskosen Probe stellt die Deformationskurve in der Kriechphase eine mit konstantem Winkel ansteigende Gerade dar. In der Relaxationsphase bleibt der erreichte Wert der Deformation erhalten.

Viskoelastische Fluids zeigen ein rheologisches Verhalten, das zwischen den Grenzfällen der ideal-elastischen und ideal-viskosen Proben liegt. In der Kriechphase nimmt die Deformation zunächst rasch zu. Danach flacht die Deformationskurve ab und nähert sich asymptotisch einer Gerade mit konstanter Steigung. Die in der Kriechphase (bei gegebener Schubspannung und Dauer der Kriechphase) erreichte maximale Deformation ist ein Maß für die Summe der viskosen und elastischen Anteile des rheologischen Verhaltens. In der Rückverformungsphase können der viskose und der elastische Anteil voneinander unterschieden werden. Die nach der Entlastung der Probe nach einer angemessenen Rückverformungszeit bestimmte bleibende Deformation ist auf ein viskoses, irreversibles Fließen zurückzuführen. Somit gestattet die Angabe der in der Kriechphase erreichten maximalen Deformation und der bleibenden Deformation nach der Relaxationsphase (bei gegebener Schubspannung und Dauer der Kriech- und Relaxationsphase) eine hinreichend charakteristische Beschreibung des rheologischen Verhaltens eines realen Fluids.

Die Deformation ist eine dimensionslose Zahl, die die Verschiebung, dividiert durch die Probenhöhe, angibt. Die Messungen für die Zwekke der vorliegenden Erfindung erfolgen bei einer Temperatur von 23 °C, einer Schubspannung von 750 Pa, einer Kriechzeit von 5 Minuten und einer Relaxationszeit von 5 Minuten. Zur Durchführung der Messungen ist ein Haake Rheometer mit CS-Modus und einem Mess-Sensor PP 35 TI bei einem Messabstand von 1 mm geeignet. Das Messprinzip beruht auf einer Torsionsmessung mit parallelen Platten.

Das erfindungsgemäße Lederpflegemittel zeigt bei 5-minütiger Einwirkung einer Schubspannung von 750 Pa eine maximale Deformation von 0,1 oder weniger, vorzugsweise 0,05 oder weniger, insbesondere 0,01 oder weniger. Nach der Relaxationsphase beträgt die bleibende Deformation gleich 50 % oder weniger, vorzugsweise gleich 40 % oder weniger, insbesondere gleich 30 % oder weniger der maximalen Deformation in der Kriechphase. Die bleibende Deformation kann bis hinunter zu 0 % oder z. B. bis hinunter zu 5 % der maximalen Deformation betragen.

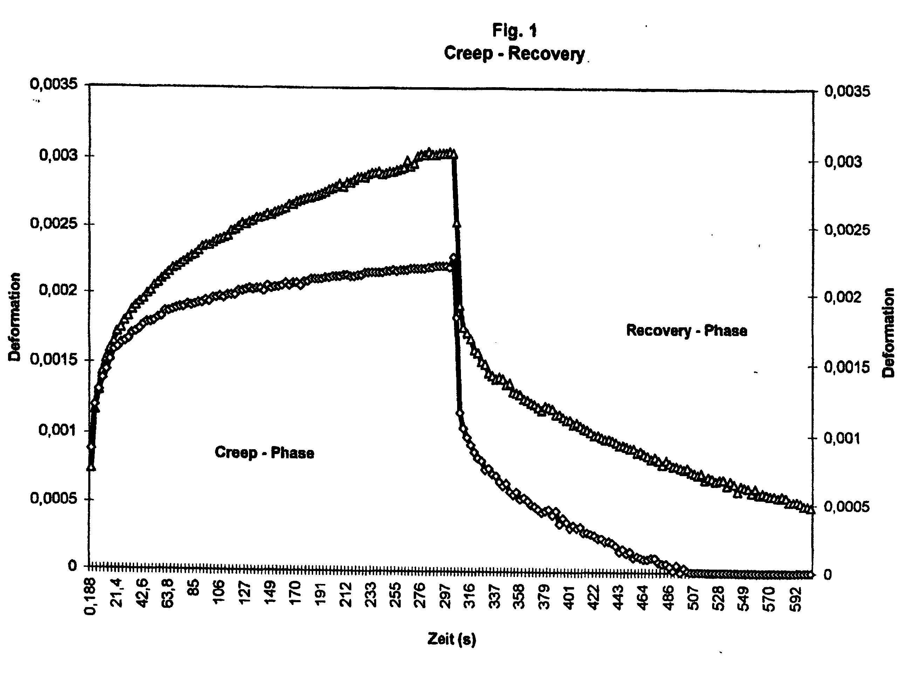

Fig. 1 zeigt ein unter den vorstehenden Bedingungen gemessenes Kriech-Kriech-/Rückverformungsdiagramm eines erfindungsgemäßen Lederpflegemittels (dreieckige Symbole) im Vergleich zu einer handelsüblichen lösungsmittelhaltigen Dosenschuhcreme (rautenförmige Symbole). Es ist ersichtlich, dass in der Kriechphase die Deformation beider Proben zunächst steil ansteigt und sich dann einer flach ansteigenden Geraden annähert. Die erreichte maximale Deformation in der 5-minütigen Kriechphase beträgt etwa 0,003 für das erfindungsgemäße Lederpflegemittel und etwa 0,0022 für die handelsübliche Dosenschuhcreme. In der Relaxationsphase geht die Deformation in beiden Fällen zunächst rasch zurück, wobei im Fall der handelsüblichen Dosenschuhcreme eine vollständige Formwiedererlangung zu beobachten ist und die bleibende Deformation im Fall des erfindungsgemäßen Lederpflegemittels etwa 0,0005 beträgt.

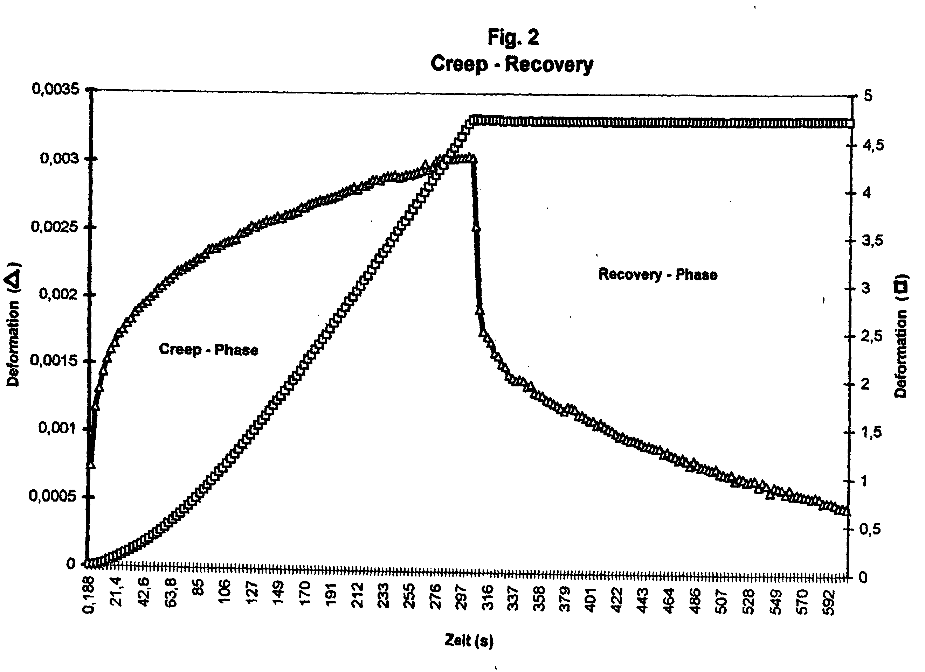

In Fig. 2 ist ein Kriech-/Rückverformungsdiagramm (Bedingungen wie vorstehend) einer pastenförmigen Lederpflegeemulsion des Standes der Technik wiedergegeben (quadratische Symbole); das Verhalten des erfindungsgemäßen Lederpflegemittels (dreieckige Symbole) ist zum Vergleich nochmals mit dargestellt. Die bekannte Lederpflegeemulsion zeigt in der Kriechphase einen nahezu linearen Anstieg der Deformation mit der Zeit. Die maximale Deformation beträgt 4,75. In der Relaxationsphase bleibt die Deformation vollständig erhalten; es erfolgt keine Rückverformung.

Unter "flüchtigen organischen Lösungsmittel" werden organische Lösungsmittel mit einem Siedepunkt unter 200 °C verstanden, wie Benzin, Terpentin oder Isopropanol. Das erfindungsgemäße Lederpflegemittel enthält weniger als 5 Gew.-%, vorzugsweise weniger als 3 Gew.-% derartiger Lösungsmittel.

Die Erfindung betrifft ferner ein Lederpflegemittel, welches enthält:
(a) 0,1 bis 15 Gew.-% eines oder mehrerer Wachse eines Tropfpunkts von 95 bis 140 °C,
(b) 0,2 bis 60 Gew.-% eines oder mehrerer Wachse eines Tropfpunkts von 45 bis 90 °C,
(c) 1 bis 15 Gew.-% Emulgator,
(d) 0 bis 20 Gew.-% fakultative Bestandteile und
(e) Differenz auf 100 Gew.-% Wasser.

Soweit nicht anders angegeben, beziehen sich Mengenangaben in Gew.-% auf das Gesamtprodukt. Das Lederpflegemittel der vorstehenden Zusammensetzung zeigt vorteilhafterweise das oben angegebene rheologische Verhalten. Im Allgemeinen enthält das erfindungsgemäße Lederpflegemittel 8 bis 25 Gew.-% Wachs und 50 bis 92 Gew.-%, vorzugsweise 60 bis 85 Gew.-% Wasser. Vorzugsweise beträgt das Gewichtsverhältnis von Emulgator zu Wachs im erfindungsgemäßen Lederpflegemittel 1:3 bis 1,5:1, insbesondere 1:2,5 bis 1,1:1, besonders bevorzugt 1:2 bis 1:1.

Die Wachsphase des erfindungsgemäßen Lederpflegemittels besteht vorzugsweise zu 0,1 bis 15 Gew.-%, insbesondere 5 bis 15 Gew.-%, aus einem oder mehreren Wachsen eines Tropfpunkts von 95 bis 140 °C (im Folgenden als "Hartwachskomponente" bezeichnet). Die Hartwachskomponente bildet im erfindungsgemäßen Lederpflegemittel bei Raumtemperatur vermutlich ein Gefüge feiner Kristalle, das als grobmaschige elastische Netzwerkstruktur wirkt.

Neben der Hartwachskomponente enthält das erfindungsgemäße Lederpflegemittel vorzugsweise 0,2 bis 60 Gew.-%, insbesondere 5 bis 30 Gew.-%, eines oder mehrerer Wachse eines Tropfpunkts von 45 bis 90 °C (im Folgenden "Weichwachskomponente"). In einer bevorzugten Ausführungsform umfasst die Weichwachskomponente ihrerseits ein Gemisch von zwei oder mehreren Wachsen unterschiedlichen Tropfpunkts. In einer bevorzugten Ausführungsform enthält das erfindungsgemäße Lederpflegemittel daher 0,1 bis 30 Gew.-%, vorzugsweise 5 bis 15 Gew.-%, eines oder mehrerer Wachse eines Tropfpunkts von 45 bis 70 °C und 0,1 bis 30 Gew.-%, vorzugsweise 5 bis 15 Gew.-%, eines oder mehrerer Wachse eines Tropfpunkts von 75 bis 90 °C.

Der Begriff "Wachs" soll für die Zwecke der vorliegenden Erfindung eine weitestgehende Bedeutung haben. So sind alle üblicherweise als Wachse oder wachsähnliche Substanzen bezeichnete Verbindungen geeignet, die die oben genannten Tropfpunktskriterien erfüllen. Es sind insbesondere die natürlichen Wachse, wie die pflanzlichen Wachse, tierischen Wachse, Mineralwachse und petrochemischen Wachse, die chemisch modifizierten Wachse und die synthetischen Wachse geeignet.

Als Hartwachskomponente ist ein Polyolefinwachs, insbesondere ein Polyethylenwachs, eines Tropfpunkts von 95 bis 120 °C, insbesondere eines Tropfpunkts von 102 bis 107 °C, bevorzugt. Bei den Polyolefinwachsen handelt es sich um Polyolefine mit wachsartigem Charakter. Sie können durch direkte Polymerisation der Basismonomere, meistens Propylen bzw. Ethylen, unter Einsatz von Reglern oder durch Depolymerisation von Produkten mit höheren Molmassen hergestellt werden. Die Polyolefinwachse können geeignete Comonomere, insbesondere vinylacetat und Acrylsäure, enthalten. Am meisten bevorzugt ist eine eng geschnittene Fraktion eines Polyolefinwachses, d. h. der Erweichungspunkt und der Tropfpunkt liegen nicht mehr als 15 °C, vorzugsweise nicht mehr als 10 °C auseinander. Besonders geeignete Polyolefinwachse weisen eine Säurezahl im Bereich von 22 bis 28 und eine Verseifungszahl von 45 bis 65 auf. Diese haben im Allgemeinen eine Dichte bei 20 °C von 0,95 bis 0,97 g/cm³.

Als Wachs eines Tropfpunkts von 45 bis 70 °C ist ein Paraffinwachs bevorzugt. Bei Paraffin handelt es sich um ein Gemisch überwiegend gesättigter, aliphatischer Kohlenwasserstoffe. Sie werden zu einem geringeren Anteil aus Braunkohleschwelteer und zu einem größeren Anteil aus Rückständen der Erdöldestillation hergestellt. Von den Erdölparaffinen sind die sogenannten grobkristallinen Paraffinwachse und die Intermediate-Wachse bevorzugt. Ein besonders geeignetes Paraffinwachs weist einen Erstarrungspunkt von 58 bis 60 °C, eine Dichte bei 80 °C von 0,774 g/cm³ (bestimmt nach DIN 51757) und eine Nadelpenetration bei 25 °C und 1/10 mm von 18 (bestimmt nach DIN 51579) auf.

Das Wachs eines Tropfpunkts von 75 bis 90 °C ist vorzugsweise ein Esterwachs, vorzugsweise mit einer Säurezahl von 4-80, insbesondere 20-40 und einer Verseifungszahl von 100 bis 180, insbesondere 115 bis 165. Esterwachse eines Tropfpunkts von etwa 80 bis 85 °C sind bevorzugt. Mitglieder dieser Gruppe sind vor allem alle pflanzlichen, tierischen sowie chemisch veränderte Wachse. Sie bestehen aus Estern, die aus linearen Carbonsäuren mit 18 bis 34 oder mehr C-Atomen und etwa gleichlangen linearen Alkoholen gebildet sind und können kleinere Anteile freier Säuren und Alkoholen aufweisen. Geeignete Esterwachse werden z. B. durch Veresterung von Oxidationsprodukten des Montanwachses mit ein- oder mehrwertigen aliphatischen Alkoholen erhalten. Es können auch Naturwachse, wie Carnaubawachs, Candelillawachs, Chinawachs, Montanwachs, harzhaltiges Montanwachs, Bienenwachs und Fruchtwachse eingesetzt werden. Ein besonders geeignetes Esterwachs weist z. B. einen Tropfpunkt von 80 bis 85 °C, eine Säurezahl von 25 bis 35 und eine Verseifungszahl von 135 bis 155 sowie eine Dichte bei 20 °C von 1,00 bis 1,02 auf.

Der Tropfpunkt des Wachses ist die Temperatur, bei der eine auf die Quecksilberkugel eines Thermometers aufgebrachte Probe des Wachses unter ihrem Eigengewicht abtropft. Er wird für die Zwecke der vorliegenden Erfindung nach der Vorschrift DIN 51801 bestimmt.

Das erfindungsgemäße Lederpflegemittel enthält vorteilhafterweise 1 bis 15 Gew.-%, vorzugsweise 5 bis 10 Gew.-% eines oder mehrerer Emulgatoren. Die Verwendung von nichtionischen Emulgatoren, gegebenenfalls in Kombination mit anderen, z. B. anionischen oder kationischen Emulgatoren, ist bevorzugt. Insbesondere bevorzugt wird jedoch ausschließlich ein nichtionischer Emulgator bzw. ein Gemisch nichtionischer Emulgatoren eingesetzt.

Vorzugsweise umfasst der nichtionische Emulgator einen mit 2 bis 30 mol C₂-C₄-Alkenoxid, vorzugsweise Ethylenoxid oder Propylenoxid, alkoxylierten C₆-C₂₈-Alkohol. Bei dem Alkohol kann es sich um Fettalkohole, d. h. langkettige lineare aliphatische Alkohole, Oxoalkohole, d. h. teilweise verzweigte höhere Alkohole, die z. B. durch Oxo-Synthese gewonnen werden können, oder Alkylphenole handeln. Die Oxoalkohole zeigen gegenüber den linearen Fettalkohole ein vorteilhaftes Emulgiervermögen und sind daher bevorzugt. Im Einzelnen lassen sich als geeignete Emulgatoren solche anführen, die folgende allgemeine Strukturformel aufweisen:

RO(CH₂CHO)ₓH .

worin R für teilweise verzweigtes C₁₃H₂₇ steht und x für 2 bis 20, insbesondere für 3, 5, 6, 6,5, 7, 8, 10, 12, 15, 20, vorzugsweise für 5, steht;
R für lineares C₁₂-C₁₄-Alkyl und x für 2 bis 10, insbesondere für 3, 4, 7 oder 8, steht;
R für teilweise verzweigtes aliphatisches C₁₃-C₁₅-Alkyl und x für 2 bis 30, insbesondere für 3, 4, 5, 7, 8, 10, 11 oder 30, steht;
R für lineares C₁₆-C₁₈-Alkyl und x für 11 oder 25 steht;
R für teilweise verzweigtes C₁₁-Alkyl und x für 2 bis 20, insbesondere für 3, 5, 6, 6,5, 7, 8 oder 11, steht;
R für teilweises verzweigtes C₁₀-Alkyl und x für 2 bis 20, insbesondere für 3, 5, 6, 6,5, 7, 8 oder 11, steht; oder
R für Alkylphenyl und x für 2 bis 20, insbesondere für 6, 7, 8, 9, 10, 14 oder 20, steht.

weitere bevorzugte nichtionische Emulgatoren sind die Sorbitanmono-, -di- oder -triester von C₆-C₂₈-Carbonsäuren, wie Sorbitanmonolaurat, Sorbitandilaurat, Sorbitantrilaurat, Sorbitanmonooleat, Sorbitandioleat, Sorbitantrioleat, Sorbitanmonopalmitat, Sorbitandipalmitat, Sorbitantripalmitat, Sorbitanmonostearat, Sorbitandistearat, Sorbitantristearat oder Gemische davon. Polysorbate, d. h. ethoxylierte Sorbitanester, sind ebenfalls geeignet.

Weitere geeignete nichtionische Emulgatoren sind z. B. Di-, Triund höhere Ester von Fettsäuren mit mehrwertigen Alkoholen, Cholesterin, Lanolin, oxidierte Fette und Öle und hochmolekulare Emulgatoren, wie Albumine, Casein, Gelatine, Gummiarabicum, Tragant, Agar, Carragheen, Saponin, Celluloseether und -ester.

Anionische Emulgatoren, die in Kombination mit dem nichtionischen Emulgator oder, weniger bevorzugt, alleine verwendet werden können, sind z. B. die Natrium-, Kalium-, Ammoniumsalze von Fettsäuren, Natriumlaurylsulfat, Natriumcetylsulfat, Natriummersolat, Natrium-2-ethylhexlysulfat, Natriumxylolsulfonat, Natriumnaphthalinsulfonat, Natriumalkylnaphthalinsulfonat, Natriumsulfonsuccinat, Natriumsalze von Sulfobernsteinsäuredialkylestern und Harzseifen.

Kationische Emulgatoren, die in Kombination mit dem nichtionischen Emulgator oder, weniger bevorzugt, alleine verwendet werden können, sind z. B. Laurylpyridiniumchlorid, Lauryltrimethylammoniumchlorid, Lauryl-colamin-formyl-methyl-pyridiniumchlorid.

Das erfindungsgemäße Lederpflegemittel kann neben den genannten zwingenden Bestandteilen 0 bis 20 Gew.-% fakultative Bestandteile enthalten. In einer bevorzugten Ausführungsform enthält das erfindungsgemäße Lederpflegemittel 0,1 bis 10 Gew.-%, vorzugsweise 2 bis 10 Gew.-%, Siliconöl, vorzugsweise lineare Polydimethylsiloxane mit vorzugsweise einer Viskosität von 5 bis 100 000 mm²/s.

Alternativ oder zusätzlich enthält das erfindungsgemäße Lederpflegemittel 0,1 bis 10 Gew.-%, vorzugsweise 0,5 bis 5 Gew.-%, Mineralöl, vorzugsweise mit einer kinematischen Viskosität von 10 bis 90 mm²/s (gemessen bei 20 °C). Derartige Mineralöle sind auch unter dem Namen Spindelöl bekannt. Der Zusatz von Siliconöl und/oder Mineralöl bewirkt eine erleichterte Polierbarkeit des erfindungsgemäβen Lederpflegemittels.

Das erfindungsgemäße Lederpflegemittel kann außerdem mit beliebigen Farbmitteln, wie Farbstoffen oder Pigmenten, eingefärbt werden. Farbmittel werden in der Regel in einer Menge von 0,1 bis 5 Gew.-% eingesetzt. Geeignete Farbmittel sind z. B. Rußdispersionen, Pigmentdispersionen oder wasserlösliche Farbstoffe, wie Säurefarbstoffe. Daneben kann des erfindungsgemäße Lederpflegemittel untergeordnete Bestandteile, wie insbesondere Konservierungsmittel oder Parfüm, enthalten. Diese Bestandteile werden üblicherweise in einer Konzentration von 0,05 bis 0,5 Gew.-%, z. B. 0,2 Gew.-%, verwendet.

Das erfindungsgemäße Lederpflegemittel wird vorzugsweise nach einem Verfahren hergestellt, bei dem die Wachse und der (die) Emulgator(en) bei erhöhter Temperatur geschmolzen werden, die Schmelze mit dem Wasser unter Eintrag von Scherenergie vermischt wird und das Gemisch abgekühlt.

So werden die Wachse und der (die) Emulgator(en) bei erhöhter Temperatur, vorzugsweise bei 80 bis 120 °C, insbesondere bei 85 bis 105 °C geschmolzen und vorzugsweise bis zur Homogenität gerührt.

Die erhaltene Schmelze wird mit Wasser, das vorzugsweise eine erhöhte Temperatur, z. B. 65 bis 85 °C, aufweist, vermischt. Das Vermischen kann z. B. diskontinuierlich oder halbkontinuierlich erfolgen. Beim diskontinuierlichen Verfahren wird die Wachsschmelze langsam unter starkem Rühren zu dem Wasser gegeben, wobei auch die umgekehrte Zugaberichtung möglich ist. Danach erfolgt die Zugabe der fakultativen Bestandteile. Beim halbkontinuierlichen Verfahren werden die Wachsschmelze und das erwärmte Wasser mittels geeigneter Vorrichtungen durch einen kontinuierlichen Mischer befördert. Die fakultativen Bestandteile werden dann, z. B. mittels Dosierpumpen, in den Produktstrom gegeben und z. B. durch statische Mischer eingemischt. Anschließend kann das Produkt durch eine Homogenisierungsvorrichtung, z. B. eine Kolloidmühle geleitet werden, um ein möglichst feinteiliges Produkt zu erzielen.

Die nachfolgenden Beispiele erläutern die Erfindung, ohne sie zu beschränken.

### Beispiel

In einem Rührbehälter wurden unter Erwärmen auf etwa 95 °C folgende Komponenten zusammengeschmolzen:

| | |
|---|---|
| Paraffin (Trp. 58-60 °C) | 4,0 Gew.-Teile |
| Esterwachs (Trp. 80-85 °C) | 6,5 Gew.-Teile |
| PE-Wachs (Trp. von 102-107 °C) | 2,4 Gew.-Teile |
| ethoxylierter langkettiger Alkohol | 5,5 Gew.-Teile |
| Sorbitantrioleat | 2,0 Gew.-Teile |
| Sorbitantristearat | 1,0 Gew.-Teile |

Die Mischung wurde unter starkem Rühren in 68,1 Gew.-Teile Wasser, das auf eine Temperatur von 80 °C vorgewärmt war, eingetragen. Unter weiterem Rühren wurden 3 Gew.-Teile Siliconöl (12 500 mm/s²), 5 Gew.-Teile Siliconölemulsion (36 Gew.-% Siliconöl 100 000 mm/s² und Emulgator), 2 Gew.-Teile Spindelöl, 0,3 Gew.-Teile Konservierungsmittel und 0,2 Gew.-Teile Parfüm dazugegeben. Die Emulsion wurde in flache Tiegel abgefüllt und erstarrte zu einer viskoelastischen Masse. Auf gleiche Weise können eingefärbte Lederpflegemittel hergestellt werden, wobei 0,1 bis 3 Gew.-Teile Farbmittel verwendet werden und der Wasseranteil entsprechend vermindert wird.

Das Ergebnis einer Kriech-Kriech-/Rückverformungsmessung an einem Haake Rheometer mit CS-Modus und Mess-Sensor PP 35 TI bei einer Schubspannung von 750 Pa und jeweils 5 Minuten Kriech- und Relaxationsphase ist in Fig. 1 dargestellt (dreieckige Symbole).

### Vergleichsbeispiel

Es wurde eine Lederpflegeemulsion gemäß folgender Rezeptur hergestellt (die Rezeptur entspricht der in der Firmenschrift der Hoechst AG "Die Ökologie braucht das Know-How" angegebenen):

| | |
|---|---|
| 10,0 Gew.-Teile | Hoechst-Wachs S |
| 10,0 Gew.-Teile | Tafelparaffin (52-62 °C) |
| 2,0 Gew.-Teile | Kolophonium |
| 2,0 Gew.-Teile | Genepol T-110/Hoechst (nichtionischer Emulgator) |
| 0,5 Gew.-Teile | KOH, 86%ig |
| 75,4 Gew.-Teile | Wasser |
| 0,1 Gew.-Teile | Konservierungsmittel |

Die etwa 110 °C heiße Schmelze aus Wachs, Kolophonium und Emulgator wurde in das etwa 90 °C heiße, KOH-haltige Wasser eingerührt und das Konservierungsmittel dazugegeben. Nach dem Abkühlen wurde eine pastenförmige Masse erhalten.

Das Ergebnis der Kriech-Kriech-/Rückverformungsmessung (Bedingungen wie im vorstehenden Beispiel) ist in Fig. 2 dargestellt (quadratische Symbole). Die maximale Deformation in der Kriechphase beträgt 4,75; die bleibende Deformation beträgt 100 % der maximalen Deformation.

## Patentansprüche

1. Lederpflegemittel, das im Wesentlichen frei von flüchtigen organischen Lösungsmitteln ist und eine Emulsion von Wachs, Wasser und Emulgator umfasst, **dadurch gekennzeichnet, dass** es bei der in der Beschreibung beschriebenen Kriech-/Rückverformungsmessung, jeweils bei einer Temperatur von 23 °C, bei 5-minütiger Einwirkung einer Schubspannung von 750 Pa eine maximale Deformation γ von 0,1 oder weniger und nach 5-minütiger Relaxation eine bleibende Deformation von 50 % der maximalen Deformation oder weniger aufweist.

2. Lederpflegemittel nach Anspruch 1, **dadurch gekennzeichnet, dass** das Gewichtsverhältnis von Emulgator zu Wachs 1:3 bis 1,5:1 beträgt.

3. Lederpflegemittel nach Anspruch 1 oder 2, enthaltend:
(a) 0,1 bis 15 Gew.-% eines oder mehrerer Wachse eines Tropfpunkts nach DIN 51801 von 95 bis 140 °C,
(b) 0,2 bis 60 Gew.-% eines oder mehrerer Wachse eines Tropfpunkts nach DIN 51801 von 45 bis 90 °C,
(c) 1 bis 15 Gew.-% Emulgator,
(d) 0 bis 20 Gew.-% fakultative Bestandteile und
(e) Differenz auf 100 Gew.-% Wasser.

4. Lederpflegemittel nach Anspruch 3, enthaltend als Komponente (b):
(b1) 0,1 bis 30 Gew.-% eines oder mehrerer Wachse eines Tropfpunkts von 45 bis 70 °C und
(b2) 0,1 bis 30 Gew.-% eines oder mehrerer Wachse eines Tropfpunkts von 75 bis 90 °C.

5. Lederpflegemittel nach einem der vorhergehenden Ansprüche, **dadurch gekennzeichnet, dass** der Emulgator einen nichtionischen Emulgator umfasst.

6. Lederpflegemittel nach Anspruch 5, **dadurch gekennzeichnet, dass** der Emulgator einen mit 2 bis 30 mol C₁-C₄-Alkenoxid alkoxylierten C₆-C₂₈-Alkohol und/oder einen Sorbitanmono-, -dioder -triester einer C₆-C₂₈-Carbonsäure umfasst.

7. Lederpflegemittel nach Anspruch 6, **dadurch gekennzeichnet, dass** der Alkohol ein verzweigter aliphatischer Alkohol ist.

8. Lederpflegemittel nach einem der vorhergehenden Ansprüche, **dadurch gekennzeichnet, dass** es außerdem wenigstens einen weiteren, unter Siliconöl und Mineralöl ausgewählten Bestandteil, jeweils in einer Menge von 0,1 bis 10 Gew.-%, enthält.

9. Lederpflegemittel nach einem der vorhergehenden Ansprüche, **dadurch gekennzeichnet, dass** es außerdem wenigstens ein Farbmittel enthält.

10. Verfahren zur Herstellung eines Lederpflegemittels nach einem der vorhergehenden Ansprüche, bei dem die Wachse und der (die) Emulgator(en) bei erhöhter Temperatur geschmolzen werden, die Schmelze mit dem Wasser unter Eintrag von Scherenergie vermischt wird und das Gemisch abgekühlt wird.

## Claims

1. Leather care agent which is substantially free from volatile organic solvents and contains an emulsion of wax, water and emulsifier, **characterised in that**, in the creep-recovery measurement as described in the specification, it exhibits a maximum deformation y of 0.1 or less when.subjected to the effect of a shear stress of 750 Pa for 5 minutes, and a permanent. deformation of not more than 50% of the maximum deformation after 5 minutes' relaxation, in each case at a temperature of 23°C.

2. Leather care agent according to claim 1, **characterised in that** the weight ratio of emulsifier to wax is from 1:3 to 1.5:1.

3. Leather care agent according to claim 1 or 2, containing:
(a) 0.1 to 15 wt.% of one or more waxes with a dropping point (according to DIN 51801) of 95 to 140°C,
(b) 0.2 to 60 wt.% of one or more waxes with a dropping point (according to DIN 51801) of 45 to 90°C,
(c) 1 to 15 wt.% of emulsifier;
(d) 0 to 20 wt.% of optional ingredients and
(e) the difference made up to 100 wt. % with water.

4. Leather care agent according to claim 3, containing as component (b) :
(b1) 0.1 to 30 wt.% of one or more waxes with a dropping point of 45 to 70°C and
(b2) 0.1 to 30 wt.% of one or more waxes with a dropping point of 75 to 90°C.

5. Leather care agent according to one of the preceding claims, **characterised in that** the emulsifier comprises a non-ionic emulsifier.

6. Leather care agent according to claim 5, **characterised in that** the emulsifier comprises a C₆-C₂₅ alcohol alkoxylated with 2 to 30 mol of C₁-C₄ alkene oxide and/or a sorbitan mono-, di- or triester of a C₆-C₂₈ carboxylic acid.

7. Leather care agent according to claim 6, **characterised in that** the alcohol is a branched aliphatic alcohol.

8. Leather care agent according to one of the preceding claims, **characterised in that** it further contains at least one additional ingredient selected from among silicon oil and mineral oil, in each case in an amount of 0.1 to 10 wt.%.

9. Leather care agent according to one of the preceding claims, **characterised in that** it further contains at least one dye.

10. Process for preparing a leather care agent according to one of the preceding claims, wherein the waxes and the emulsifier(s) are melted at elevated temperature, the melt is mixed with the water with an input of shear energy and the mixture is cooled.

## Revendications

1. Produit d'entretien du cuir, pratiquement dépouvu de solvant organique volatil et comportant une émulsion de cire, d'eau et d'émulsifiant, **caractérisé en ce que**, quand il est soumis à la mesure de fluage/relaxation décrite dans la partie descriptive, il présente, à une température de 23 °C, une déformation maximale y de 0,1 ou inférieure sous l'effet d'une contrainte de cisaillement de 750 Pa pendant 5 minutes et une déformation résiduelle de 50 % de la déformation maximale ou inférieure après une temps de relaxation de 5 minutes.

2. Produit d'entretien du cuir selon la revendication 1, **caractérisé en ce que** le rapport pondéral entre l'émulsifiant et la cire est compris entre 1:3 et 1,5:1.

3. Produit d'entretien du cuir selon la revendication 1 ou 2, comprenant :
(a) entre 0,1 et 15 % en poids d'une ou plusieurs cires dont le point de goutte suivant la norme DIN 51801 est compris entre 95 et 140 °C,
(b) entre 0,2 et 60 % en poids d'une ou plusieurs cires dont le point de goutte suivant la norme DIN 51801 est compris entre 45 et 90 °C,
(c) de 1 à 15 % en poids d'émulsifiant,
(d) de 0 à 20 % en poids de constituants facultatifs,
(e) et de l'eau pour la différence à 100 % en poids.

4. Produit d'entretien du cuir selon la revendication 3, comportant en tant que constituant (b) :
(b1) entre 0,1 et 30 % en poids d'une ou plusieurs cires dont le point de goutte est compris entre 45 et 70 °C,
(b2) et entre 0,1 et 30 % en poids d'une ou plusieurs cires dont le point de goutte est compris entre 75 et 90 °C.

5. Produit d'entretien du cuir suivant l'une des revendications précédentes, **caractérisé en ce que** l'émulsifiant est un émulsifiant non ionique.

6. Produit d'entretien du cuir suivant la revendication 5, **caractérisé en ce que** l'émulsifiant comporte de 2 à 30 moles d'un alcool en C₆-C₂₈ alkoxylé d'oxyde d'alcène en C₁-C₄ et/ou d'un mono-, di- ou tri-ester de sorbitanne d'un acide carboxylique en C₆-C₂₈.

7. Produit d'entretien suivant la revendication 6, **caractérisé en ce que** ledit alcool est un alcool aliphatique ramifié.

8. Produit d'entretien du cuir suivant l'une quelconque des revendications précédentes, **caractérisé en ce qu'**il comporte en outre au moins un autre constituant choisi parmi les huiles de silicones et les huiles minérales, présent dans l'un ou l'autre cas dans la proportion de 0,1 à 10 % en poids.

9. Produit d'entretien du cuir suivant l'une quelconque des revendications précédentes, **caractérisé en ce qu'**il comporte en outre au moins un colorant.

10. Procédé de préparation d'un produit d'entretien du cuir suivant l'une quelconque des revendications précédentes, suivant lequel la cire et le ou les émulsifiants sont fondus par chauffage, la masse fondue est mélangée à l'eau sous effort de cisaillement et le mélange est refroidi.
